# EUROPEAN PATENT APPLICATION

(11) **EP 4 736 653 A1**
(43) Date of publication of application: **06.05.2026**
(21) Application number: 24383189.8
(22) Date of filing: 30.10.2024

(54) **FISH-BASED DOUGH AND PROCESS TO OBTAIN THE DOUGH**

(71) Applicant: Compass Group Holdings Spain, S.L., 07007 Palma de Mallorca (Illes Balears) (ES); Entrambosmares, S.L., 11500 Puerto de Santa María (Cádiz) (ES)
(72) Inventor: ALONSO PÉREZ, Ismael, 26250 SANTO DOMINGO DE LA CALZADA (La Rioja) (ES)
(74) Representative: Herrero & Asociados, S.L.

(57) **Abstract**

The present invention relates to a fish-based dough and the process for its preparation. This dough incorporates fish as a primary ingredient, providing an enhanced nutritional benefits. The fish-based dough can be used in a variety of culinary applications, including but not limited to pizza, flatbreads, focaccia and calzone. The method of preparation ensures that the dough maintains its desired texture and flavor, while also offering the health benefits associated with the inclusion of fish. Preferably the fish-based dough is a fish-based pizza.

## Description

### FIELD OF THE INVENTION

The present invention relates to a fish-based dough and the process for its preparation. This dough incorporates fish as a primary ingredient, providing an enhanced nutritional benefits. The fish-based dough can be used in a variety of culinary applications, including but not limited to pizza, flatbreads, focaccia and calzone. The method of preparation ensures that the dough maintains its desired texture and flavor, while also offering the health benefits associated with the inclusion of fish. Preferably the fish-based dough is a fish-based pizza.

### BACKGROUND OF THE INVENTION

The current state of the art for fish-based dough can be illustrated by examining existing patent documents. Notable among these are the Korean patent application KR20060127764A and the Japanese patent application JP2000279136A.

The patent application KR20060127764A describes a pizza dough that incorporates fish. The dough composition includes 100 parts by weight of wheat flour, 10-30 parts by weight of fish, 40-60 parts by weight of water, and 4-6 parts by weight of yeast. The method involves mixing the fish, yeast, water, and flour. One of the challenges mentioned in the KR20060127764A is the integration of fish into the dough, which is addressed by using double the normal amount of yeast and increasing the fermentation time. This approach helps in achieving a satisfactory dough texture despite the inclusion of fish. This patent application provides a method for incorporating fish into a traditional wheat flour-based dough, it relies on adjusting the yeast content and fermentation time to address integration challenges.

The document JP2000279136A, details a different approach where the pizza dough is primarily made using squid as the main ingredient. The composition described includes squid and water, without incorporating wheat flour as in traditional doughs. This document represents a more distant prior art because the base of the pizza is formed entirely from fish (squid) and water, without the use of flour or other typical dough ingredients.

Therefore, there remains a need for an improved method of creating a fish-based dough that maintains the desirable characteristics of traditional dough while seamlessly incorporating fish as a primary ingredient.

### SUMMARY OF THE INVENTION

The present invention offers several technical advantages. Despite the incorporation of fish, the fish-based dough maintains the desirable properties of traditional doughs, such as fluffiness and elasticity. The fish-based dough can be used in a wide range of culinary applications, from pizza to flatbreads. The fish-based dough of the invention allows to be shaped and cooked using conventional methods, making it suitable for various gastronomic uses while still delivering the unique benefits of fish inclusion. A high fish content has been successfully incorporated while maintaining the dough's baking properties.

The process of incorporating fish into the dough ensures a uniform distribution of fish proteins and nutrients throughout the dough matrix. This technical approach maximizes the nutritional benefits, providing a consistent and balanced intake of essential nutrients, such as omega-3 fatty acids, vitamins, and minerals, in each serving. The process of the invention effectively integrates the fish without compromising the dough's texture, resulting in a product that is light, airy, and pleasant to eat. The process addresses the challenge of integrating fish into the dough by optimizing the fermentation process. The technical process ensures that the final product has a texture and flavour that are appealing to children. By carefully balancing the fish content and dough ingredients, the product is both nutritious and enjoyable, encouraging healthier eating habits among young consumers.

The fish-based dough here described, combining enhanced nutritional benefits with the desirable qualities of traditional doughs, thereby creating a versatile and appealing product.

In this kind of fish-based dough the yeasts require specific humidity and temperature conditions to thrive and facilitate the fermentation of the dough; humidity, without adequate moisture, yeast cannot activate, as it needs its nutrients to be dissolved in water to assimilate them and temperature, yeast activity is significantly hindered below 26°C and weakened above 35°C. Thus, it is essential not to mix the fish with flour and other ingredients at very low temperatures, as this would impede the yeast's ability to function.

A very relevant step in the process is the defrosting of the fish. The defrosting of the fish, considering the time/temperature relationship, is crucial. Proper defrosting positively affects the water activity (AW). Incorrect defrosting (either too fast or at inappropriate temperatures outside the ideal range) would alter the water activity, leading to increased dehydration of the fish's muscle tissue. This defrosting step would negatively impact the quality of the final dough, as the fermentation process would be adversely affected.

For these reasons, the optimal defrosting of the fish plays a crucial role in achieving a uniform dough and ensuring proper fermentation. Proper fermentation leads to the dough rising correctly, resulting in the characteristic aromas and final texture of a pizza dough.

The present process ensures that the fish is defrosted under conditions that support yeast activity. This careful control of moisture and temperature during the mixing process guarantees that the dough develops the desired consistency, flavor, and texture, overcoming the typical challenges associated with integrating fish into a traditional dough base.

The water activity (AW) in fish significantly changes during the defrosting process. When fish is frozen, the water in its muscle tissue forms ice crystals, effectively reducing the available water for microbial activity. As the fish begins to thaw, these ice crystals melt, gradually increasing the water activity. Proper defrosting, conducted at controlled temperatures and appropriate time intervals, ensures that the water is evenly reabsorbed by the muscle tissue, maintaining its hydration and structural integrity. Conversely, rapid or improperly controlled defrosting leads to excessive loss of water, as the muscle fibers cannot reabsorb the moisture quickly enough, resulting in increased dehydration and drip loss. This not only affects the texture and quality of the fish but also alters the water activity, which can impact subsequent processes like fermentation in dough preparation. Maintaining optimal water activity during defrosting is crucial for preserving the fish's quality and ensuring the successful integration of fish into a dough mixture.

Water activity (AW) is a measure of the availability of water in a substance for biological reactions and microbial growth. It is defined as the ratio of the vapor pressure of water in the substance to the vapor pressure of pure water at the same temperature. Water activity is expressed on a scale from 0 (completely dry) to 1.0 (pure water). In food science, AW is crucial because it influences the shelf life, safety, and quality of food products. Higher water activity levels can promote the growth of bacteria, yeast, and mold, whereas lower levels can inhibit microbial growth and extend the product's shelf life. Proper control of water activity is essential in food processing and preservation to ensure product stability and safety.

The starting material for the dough base comprises pieces of white fish. This starting material excludes processed forms such as surimi or fish paste, ensuring the integrity and quality of the final product.

The term "white fish" as used in this invention encompasses any type of white-fleshed fish. Importantly, the fish utilized must be in the form of pieces, block of fish, not processed forms such as surimi or fish paste. This ensures that the nutritional and textural qualities of the fish are retained in the final product.

The white fish pieces starting material is a temperature between -18°C to -25°C. After this there is a defrosting step for the white fish. During this defrosting step, the pieces of white-fleshed fish are carefully defrosted to preserve their texture and nutritional properties.

Therefore, the first aspect of the invention is a process for preparing a dough base, comprising the steps of:
a) receiving white fish pieces that are at a temperature between -18°C to -25°C;
b) defrosting the white fish pieces obtained in step a) at a temperature up to from - 4°C to 6°C in a cooling chamber;
c) weighing the starting materials wherein the starting material comprises, flour in a range from 40% w/wt to 50% w/wt; yeast in a range from 0.5% w/wt to 5%w/wt; vegetable oil in a range from 2% w/wt to 4% w/wt and the white fish obtained in step b) in a range from 40% w/wt to 53% w/wt;
d) kneading the flour and the white fish and resting the mix of flour and white fish to obtain a preferment;
e) kneading the preferment with the yeast, the vegetable oil to obtain the dough;
f) dividing and balling the dough,
g) fermenting the dough,
h) flouring and stretching the dough.

The second aspect of the invention is the white fish-based dough comprising flour in a range from 40% w/wt to 50% w/wt; yeast in a range from 0.5% w/wt to 5%w/wt; vegetable oil in a range from 2% w/wt to 4% w/wt and the white fish from 40% w/wt to 53% w/wt.

The invention also refers to the dough obtained by the process of the invention.

A dough-based product encompasses any baked or prepared food item that originates from a dough mixture. This includes, but is not limited to, pizza crusts, flatbreads, to pizza, flatbreads, focaccia and calzone. These products are characterized by their dough which can be customized with various ingredients.

### DETAILED DESCRIPTION OF THE INVENTION

In one preferred embodiment of the first and second aspect of the invention the white fish used is hake, which is known for its delicate flavor and firm texture. However, other types of white-fleshed fish may also be used, provided they meet the criteria of being whole pieces and not processed. In a preferred embodiment the white fish is selected from a group consisting of haddock, cod, pollock. In a particular embodiment the white fish is hake (family *Merlucciidae*) more particularly the hake comprises water between 80% and 95% weight water/total hake weight.

In a preferred embodiment of the process of the invention the starting materials wherein the starting material comprises, flour in a range from 40% w/wt to 50% w/wt; yeast in a range from 0.5% w/wt to 5%w/wt; vegetable oil in a range from 2% w/wt to 4% w/wt and the white fish obtained in step b) in a range from 40% w/wt to 53% w/wt; salt in a range from 0.5% to 1.5% and sourdough starter in a range from 2% to 4%.

In an embodiment of the white fish-based dough comprising flour in a range from 40% w/wt to 50% w/wt; yeast in a range from 0.5% w/wt to 5%w/wt; vegetable oil in a range from 2% w/wt to 4% w/wt and the white fish in a range from 40% w/wt to 53% w/wt; salt in a range from 0.5% to 1.5% and sourdough starter in a range from 2% to 4%. In a particular embodiment the fish-based dough is a pizza.

In a more preferred embodiment in the process and in the white fish-based dough the white fish is in a range from 45% w/wt to 52%; the white fish percentage is selected from:45%, 46%, 47%, 48%, 49%, 50%, 51% and 52%.

In a preferred embodiment the white fish-based dough is topped with a tomato layer. In a particular embodiment the tomato layer is in a weight range (%w/%wt) from 10% to 20%.

In a preferred embodiment the vegetable oil is selected from: olive oil; sunflower oil; sesame oil, grapeseed oil. In a particular embodiment the oil is olive oil.

As it is said above the first aspect of the invention is a process for preparing a dough base, comprising the steps of:
a) receiving white fish pieces that are at a temperature between -18°C to -25°C;
b) thawing the white fish pieces obtained in step a) at a temperature from -4°C to 6°C in a cooling chamber;
c) weighing the starting materials wherein the starting material comprises, flour in a range from 40% w/wt to 50% w/wt; yeast in a range from 0.5% w/wt to 5%w/wt; vegetable oil in a range from 2% w/wt to 4% w/wt and the white fish obtained in step b) in a range from 40% w/wt to 53% w/wt;
d) kneading the flour and the white fish and resting the mix of flour and white fish to obtain a preferment;
e) kneading the preferment with the yeast, the vegetable oil to obtain the dough;
f) dividing and balling the dough,
g) fermenting the dough,
h) flouring and stretching the dough.

In a preferred embodiment the step b) is carried out at a range temperature from 4°C to 6°C.

In a preferred embodiment the step d) is carried out at a temperature in a range from 26°C to 35°C.

In a preferred embodiment after the step h) the process comprises a step j) of cooking the dough at a temperature in a range between 220°C to 280°C.

In a preferred embodiment after the step h) the process and before the step j) the process comprises a step i) of covering the dough with a crushed tomato layer.

Finally in a preferred embodiment after the step i) the process comprises a step k) of blast chilling at a temperature range between -20°C to -25°C.

Blast chilling is a rapid cooling process used in the food industry to lower the temperature of cooked food quickly to a safe level, in a short amount of time. This step helps to preserve the quality, texture, and nutritional value of the food while significantly reducing the risk of bacterial growth and extending the shelf life of the product.

### Examples

### Example 1

Two kilograms of hake were used. The hake used as the starting material has a water content of 90%.

A preferment was obtained by kneading 4.8 kg of flour with 4 kg of fish for three and a half minutes, then allowing this dough to rest for 20 minutes. Once this preferment was obtained, it was kneaded with 0.102 kg of salt, 0.150 kg of yeast, 0.300 kg of sourdough, and 0.300 kg of olive oil. As a percentage, this represents the starting materials as follows: 49.731% flour, 1.057% salt, 1.554% yeast, 3.108% sourdough starter, 41.442% fish, and 3.108% olive oil.

Once baked, this dough resulted in a pizza with a high fish content but with an appearance and texture similar to pizza dough without fish in the mixture.

### Example 2

Two kilograms of hake were used. The hake used as the starting material has a water content of 90%.

A preferment was obtained by kneading 4.8 kg of flour with 5.3 kg of fish for three and a half minutes, then allowing this dough to rest for 20 minutes. Once this preferment was obtained, it was kneaded with 0.102 kg of salt, 0.150 kg of yeast, 0.300 kg of sourdough starter, and 0.300 kg of olive oil. As a percentage, this represents the starting materials as follows: 43.828% flour, 0.931% salt, 1.370% yeast, 2.739% sourdough starter, 48.393% fish, and 3.108% olive oil.

Once baked, this dough resulted in a pizza crust with a high fish content but with an appearance and texture similar to pizza dough without fish in the mixture.

### Example 3. Comparative example of the invention

In this comparative example, the preferment was made with flour and water only, and in this case, the fish amount that was successfully incorporated into the dough was only 28.703%.

Two kilograms of hake were used. The hake used as the starting material has a water content of 90%.

A preferment was obtained by kneading 2.4 kg of flour with 0.9 kg of water for three and a half minutes. Once this preferment was obtained, it was kneaded with 0.051 kg of salt, 0.075 kg of yeast, 0.150 kg of sourdough, 1,5 kg of fish and 0.150 kg of olive oil. As a percentage, this represents the starting materials as follows: 45.924% flour, 0.976% salt, 1.435% yeast, 2.879% sourdough starter, 28.703% fish, and 2.870% olive oil.

### Example 4. Comparative example of the invention

Two kilograms of hake were used. The hake used as the starting material has a water content of 90%.

A preferment was obtained by kneading 4.8 kg of flour with 5,3 kg of fish for three and a half minutes, then allowing this dough to rest for 20 minutes. Once this preferment was obtained, it was kneaded with 0.102 kg of salt, 0.150 kg of yeast, 0.300 kg of sourdough, and 0.300 kg of olive oil. As a percentage, this represents the starting materials as follows: 37.559% flour, 0.891% salt, 1.310% yeast, 2.620% sourdough starter, 55% fish, and 2.620% olive oil.

This dough has not the right consistence to be stretched. In the preparation of pizza dough, achieving the correct texture and physical characteristics is crucial for ensuring that the dough can be properly stretched and shaped. If the dough lacks the necessary elasticity and cohesiveness, it becomes difficult to stretch it evenly into the desired shape. This can result in an uneven thickness and inconsistent surface, which directly impacts the texture of the finished pizza. When baked, such dough is likely to produce a crust that is dense, tough, or unevenly cooked, lacking the desired qualities of a traditional pizza crust. Thus, it is evident that the initial handling and physical properties of the dough are fundamental to achieving the optimal texture and overall quality of the baked pizza.

## Claims

1. A process for preparing a dough base, comprising the steps of:
a) receiving white fish pieces that are at a temperature between -18°C to -25°C;
b) defrosting the white fish pieces obtained in step a) at a temperature from -4°C to 6°C in a cooling chamber;
c) weighing the starting materials wherein the starting material comprises, flour in a range from 40% w/wt to 50% w/wt; yeast in a range from 0.5% w/wt to 5%w/wt; vegetable oil in a range from 2% w/wt to 4% w/wt and the white fish obtained in step b) in a range from 40% w/wt to 53% w/wt;
d) kneading the flour and the white fish and resting the mix of flour and white fish to obtain a preferment;
e) kneading the preferment with the yeast, the vegetable oil to obtain the dough;
f) dividing and balling the dough,
g) fermenting the dough,
h) flouring and stretching the dough.

2. The process according claim 1 **characterized by** the white fish is hake.

3. The process according any of the claims 1 to 2 **characterized by** the starting materials comprises, flour in a range from 40% w/wt to 50% w/wt; yeast in a range from 0.5% w/wt to 5%w/wt; vegetable oil in a range from 2% w/wt to 4% w/wt, the white fish obtained in step b) in a range from 40% w/wt to 53% w/wt; salt in a range from 0.5% to 1.5% and sourdough starter in a range from 2% to 4%.

4. The process according any of the claims 1 to 3 **characterized by** after the step h) the process further comprises a step j) of cooking the dough at a temperature in a range between 220°C to 280°C.

5. The process according any of the claims 1 to 4 **characterized by** after the step h) and before the step j) the process further comprises a step i) of covering the dough with a crushed tomato layer.

6. The process according any of the claims 1 to 5 **characterized by** after the step i) the process further comprises a step k) of blast chilling at a temperature range between -20°C to -25°C.

7. A white fish-based dough **characterized by** comprising flour in a range from 40% w/wt to 50% w/wt; yeast in a range from 0.5% w/wt to 5%w/wt; vegetable oil in a range from 2% w/wt to 4% w/wt and the white fish from 40% w/wt to 53% w/wt.

8. The white fish-based dough according claim 7 **characterized by** further comprising salt in a range from 0.5% to 1.5% and sourdough starter in a range from 2% to 4%.

9. The white fish-based dough according any of the claims 7 to 8 **characterized by** the white fish-based dough is topped with a tomato layer.

10. The white fish-based dough according claim 7 **characterized by** the tomato layer is in a weight range (%w/%wt) from 10% to 20%.

11. The white fish-based dough according any of the claims 7 to 9 **characterized by** the vegetable oil is olive oil.

12. The white fish-based dough according any of the claims 7 to 10 **characterized by** the white fish is hake.

13. The white fish-based dough according any of the claims 7 to 12 **characterized by** the white fish bases dough is a white fish-based pizza.
